# EUROPEAN PATENT SPECIFICATION

(11) **EP 3 943 346 B1**
(45) Date of publication and mention of the grant of the patent: **07.01.2026**
(21) Application number: 21176196.0
(22) Date of filing: 27.05.2021
(51) Int. Cl.: B60R 25/24

(54) **SYSTEM AND METHOD FOR CONTROLLING VEHICLE**
SYSTEM UND VERFAHREN ZUR STEUERUNG EINES FAHRZEUGS
SYSTÈME ET PROCÉDÉ DE COMMANDE DE VÉHICULE

(30) Priority: 24.07.2020 GB 202011464
(43) Date of publication of application: 26.01.2022
(73) Proprietor: AUMOVIO Germany GmbH, 60488 Frankfurt am Main (DE)
(72) Inventor: Li, Qiying, 339780 Singapore (SG)
(74) Representative: Aumovio Corporation

(56) References cited:
- KR-A- 20200 071 201
- US-A1- 2015 042 454
- US-A1- 2017 282 856
- US-A1- 2019 080 539

## Description

### TECHNICAL FIELD

The present invention relates to a system and a method for controlling a vehicle, and particularly relates to a system and a method for controlling at least one of a door and a start of the engine.

### BACKGROUND

The following discussion of the background is intended to facilitate an understanding of the present invention only. It may be appreciated that the discussion is not an acknowledgement or admission that any of the material referred to was published, known or part of the common general knowledge of the person skilled in the art in any jurisdiction as at the priority date of the present invention.

A smart key is an electronic access and authorization system which eliminates a need to insert a key in a keyhole of the vehicle when the user wishes to lock, unlock and/or start the vehicle. The smart key may be identified via an antenna in the vehicle. Once the smart key is identified, the vehicle may automatically be locked, unlocked or started. A prior art vehicle with a smart key is described in US2017282856A.

With the advent of the technology of the smart key, a new technology allowing the user to control locking, unlocking and/or starting the vehicle using a mobile device has been developed. However, when the user controls the vehicle using the mobile device, obstacles such as a noise, a reflection and a collision of an electromagnetic wave may affect a wireless signal transmitted and received between the mobile device and the vehicle. Such obstacles may affect an accuracy of the position detection of the mobile device, and thereby lead an unintended control.

To improve the accuracy of the position detection of the mobile device, ultra-wideband (hereinafter referred to as "UWB") technology has been introduced. The UWB is a radio technology that can use a low energy level for short-range and high-bandwidth communications over a large portion of the radio spectrum. However, to utilise the UWB for communication between the vehicle and the mobile device, the mobile device may need to add an extra hardware component.

In light of the above, there exists a need to provide a solution that meets the mentioned needs at least in part.

### SUMMARY

Throughout the specification, unless the context requires otherwise, the word "comprise" or variations such as "comprises" or "comprising", will be understood to imply the inclusion of a stated integer or group of integers but not the exclusion of any other integer or group of integers.

Furthermore, throughout the specification, unless the context requires otherwise, the word "include" or variations such as "includes" or "including", will be understood to imply the inclusion of a stated integer or group of integers but not the exclusion of any other integer or group of integers.

The present invention seeks to provide a system and a method that addresses the aforementioned need at least in part.

The technical solution is provided in the form of a system and a method for controlling a vehicle. The system comprises the vehicle and a mobile device. The vehicle comprises a vehicle control unit operable to detect a user's input to control at least one of a door and a start of an engine. The vehicle control unit is operable to control the at least one of the door and the start of the engine. The mobile device comprises a sensor capable of detecting a position and a motion pattern of the mobile device. When the vehicle control unit detects the user's input, the vehicle control unit is operable to collect a latest position of the mobile device and the motion pattern of the mobile device from the sensor, determine a current position of the mobile device with respect to the vehicle based on the collected information, and decide whether to control the at least one of the door and the start of the engine.

Therefore, the system and the method in accordance with the present invention can accurately detect whether the user carries the mobile device which is used as a key for the vehicle. In accordance with the present invention, such detection may not be influenced by an external factor such as noise reflection and collision of an electromagnetic, and thereby may be more correct. In addition, in view that the present invention utilises the sensor equipped in the mobile device, it is not needed to modify the hardware of the mobile device to achieve such functions.

In accordance with an aspect of the present invention, there is a system for controlling a vehicle comprising: the vehicle comprising a vehicle control unit operable to detect a user's input to control at least one of a door and a start of an engine, and control the at least one of the door and the start of the engine; and a mobile device comprising a sensor capable of detecting a position and a motion pattern of the mobile device, characterised in that: when the vehicle control unit detects the user's input, the vehicle control unit is operable to collect a latest position of the mobile device and the motion pattern of the mobile device from the sensor, determine a current position of the mobile device with respect to the vehicle based on the collected information, and decide whether to control the at least one of the door and the start of the engine.

In some embodiments, the vehicle further comprises a first communication unit and the mobile device comprises a second communication unit, and the first and the second communication units are capable of data communication with each other.

In some embodiments, when the vehicle control unit detects the user's input, the vehicle control unit is operable to authenticate the mobile device using the data communication between the first communication unit and the second communication unit.

In some embodiments, when the mobile device is authenticated by the vehicle control unit, the vehicle control unit collects the latest position of the mobile device and the motion pattern of the mobile device from the sensor to determine the current position of the mobile device with respect to the vehicle.

In some embodiments, the latest position of the mobile device is a position of the mobile device before detecting the user's input.

In some embodiments, if the latest position of the mobile device is detected as inside the vehicle and the motion pattern of the mobile device is detected as moving from inside the vehicle to outside the vehicle, the vehicle control unit determines the current position of the mobile device as outside the vehicle.

In some embodiments, if the latest position of the mobile device is detected as inside the vehicle and the motion pattern of the mobile device is detected as keeping inside the vehicle, the vehicle control unit determines the current position of the mobile device as inside the vehicle.

In some embodiments, if the latest position of the mobile device is detected as outside the vehicle and the motion pattern of the mobile device is detected as moving from outside the vehicle to inside the vehicle, the vehicle control unit determines the current position of the mobile device as inside the vehicle.

In some embodiments, if the latest position of the mobile device is detected as outside the vehicle and the motion pattern of the mobile device is detected as keeping outside the vehicle, the vehicle control unit determines the current position of the mobile device as outside the vehicle.

In some embodiments, the sensor includes at least one of a gyro sensor, an acceleration sensor and a magnetometric sensor.

In some embodiments, the control of the door includes at least one of locking and unlocking the door of the vehicle.

In accordance with another aspect of the present invention, there is a method of controlling a vehicle comprising: detecting a user's input to control at least one of a door and a start of an engine; collecting a latest position of a mobile device and a motion pattern of the mobile device from a sensor of the mobile device; determining a current position of the mobile device with respect to the vehicle based on the collected information; and deciding whether to control the at least one of the door and the start of the engine.

In some embodiments, the method further comprises a step of authenticating the mobile device using a data communication between the mobile device and the vehicle. In some embodiments, after the step of authenticating of the mobile device, the step of collecting the latest position of the mobile device and the motion pattern of the mobile device is operated.

In accordance with another aspect of the present invention, there is a vehicle comprising: a vehicle control unit operable to detect a user's input to control at least one of a door and a start of an engine, and control the at least one of the door and the start of the engine; and a first communication unit capable of data communication with a mobile device, characterised in that: when the vehicle control unit detects the user's input, the vehicle control unit is operable to collect a latest position of the mobile device and the motion pattern of the mobile device from the mobile device, determine a current position of the mobile device with respect to the vehicle based on the collected information, and decide whether to control the at least one of the door and the start of the engine.

Other aspects of the invention will become apparent to those of ordinary skilled in the art upon review of the following description of specific embodiments of the present invention in conjunction with the accompanying drawings.

### BRIEF DESCRIPTION OF DRAWINGS

The present invention will now be described, by way of example only, with reference to the accompanying drawings, in which:
Fig. 1 is a block diagram in accordance with an embodiment of the present invention.
Fig. 2 is a conceptual diagram in accordance with an embodiment of the present invention.
Fig. 3 is another conceptual diagram in accordance with an embodiment of the present invention.
Fig. 4 is a flowchart in accordance with an embodiment of the present invention.

Other arrangements of the present invention are possible and, consequently, the accompanying drawings are not to be understood as superseding the generality of the preceding description of the invention.

### DETAILED DESCRIPTION OF EMBODIMENT

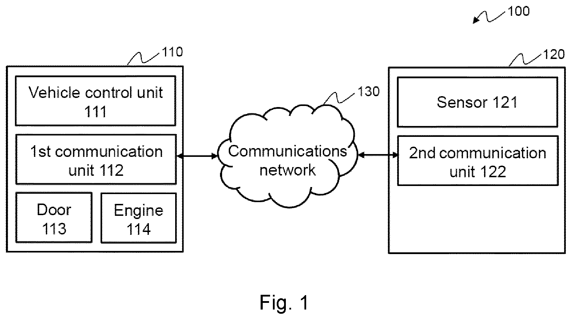

Fig. 1 is a block diagram in accordance with an embodiment of the present invention.

As shown in Fig. 1, a system 100 in accordance with an embodiment of the present invention comprises a vehicle 110 and a mobile device 120. The vehicle 110 and the mobile device 120 are operable to communicate with each other via a communications network 130.

The vehicle 110 may include a vehicle operating by a user's control. The vehicle 110 may further include a vehicle operating itself and performing necessary functions without the user's intervention, through an ability to sense its surroundings (referred to as an "autonomous vehicle").

The vehicle 110 may include a vehicle control unit 111. The vehicle control unit 111 is an embedded system in automotive electronics which controls one or more of electrical systems or subsystems in the vehicle 110.

The vehicle control unit 111 may perform a remote keyless entry (also referred to as "RKE") control to lock and/or unlock one or more doors 113 of the vehicle 110. The vehicle control unit 111 may perform a passive entry and start engine (also referred to as "PASE") control to start an engine 114 of the vehicle 110. The vehicle control unit 111 may use a detected location information of the mobile device 120 to perform the RKE control and the PASE control.

Specifically, the vehicle control unit 111 may include, but not be limited to, a door control unit (also referred to as "DCU") and an engine control unit (also referred to as "ECU"). The door control unit is operable to control the one or more doors 113 of the vehicle 110. For example, the door control unit is operable to control locking and unlocking the one or more doors 113. The engine control unit is operable to control the engine 114. For example, the engine control unit is operable to control the start of the engine 114 to start the vehicle 110.

The mobile device 120 may belong to a user, for example a person who is authorised to control or drive the vehicle 110 (for example, an owner of the vehicle 110 and/or an authorised driver of the vehicle 110). The mobile device 120 may be used to control the vehicle 110. The mobile device 120 may include, but not be limited to, smartphone, tablet computer, laptop computer, desktop computer and wearable device. The wearable device may include, but not be limited to, smart watch, smart glasses or mobile virtual reality headset. It may be appreciated that the user may use a plurality of mobile devices 120, for example a smartphone and a smart watch. In some embodiments, the plurality of mobile devices 120 may communicate with each other.

The mobile device 120 may include a sensor 121. The sensor 121 may include, but not be limited to, a location sensor and a motion sensor.

The location sensor may drive to detect a location of the mobile device 120. In some embodiments, the location sensor may include but not limited to a global positioning system (also referred to as "GPS") module to acquire location data of the mobile device 120. It may be appreciated that, in some embodiments, the location sensor may be used with or integrated with the second communication unit 122. The location sensor may detect the latest position of the mobile device 120. For example, the location sensor may detect the position of the mobile device 120 with respect to the vehicle 110.

The motion sensor may include, but not be limited to, at least one of a gyro sensor, an acceleration sensor and a magnetometric sensor. The motion sensor may drive to detect a motion pattern of the mobile device 120. The motion pattern may include, but not be limited to, at least one of an orientation or rotation of a body of the mobile device 120, and an acceleration or deceleration of the body of the mobile device 120. In this manner, the motion sensor may detect a motion pattern of the mobile device 120. For example, the motion sensor may distinguish situations in which the mobile device 120 is being kept in place and/or moving in short time. As another example, the motion sensor may further distinguish situations in which the user carrying the mobile device 120 is standing up, getting out of the door 113 and/or walking.

The communications network 130 is operable to connect the vehicle 110 and the mobile device 120. The communications network 130 may provide a connection path which allows the vehicle 110 and the mobile device 120 to connect to each other and to transmit and send information.

The vehicle 110 may further include a communication unit (hereinafter referred to as "a first communication unit") 112. The first communication unit 112 may communicate with an external device (for example, the mobile device 120) over the communications network 130.

In some embodiments, the first communication unit 112 may transmit and/or receive the information using a channel access method, for example Code-division multiple access (CDMA) or Time-division multiple access (TDMA). In some embodiments, the first communication unit 112 may support wireless Internet access to the external device (for example, the mobile device 120). Examples of such wireless Internet access may include, but not be limited to, wireless LAN (WLAN) (for example, Wi-Fi), wireless broadband (Wi-bro), worldwide interoperability for microwave access (Wi-max) and high speed downlink packet access (HSDPA). In some embodiments, the first communication unit 112 may support a short range communication to communicate with the external device (for example, the mobile device 120). Examples of such short range communication may include, but not be limited to, Bluetooth, Radio Frequency Identification (RFID), Ultra-wideband (UWB) and ZigBee.

The mobile device 120 may further include a communication unit (hereinafter referred to as "a second communication unit") 122. The second communication unit 122 may communicate with an external device (for example, the vehicle 110) over the communications network 130.

In some embodiments, the second communication unit 122 may transmit and/or receive the information using a channel access method, for example Code-division multiple access (CDMA) or Time-division multiple access (TDMA). In some embodiments, the second communication unit 122 may support wireless Internet access to the external device (for example, the vehicle 110). Examples of such wireless Internet access may include, but not be limited to, wireless LAN (WLAN) (for example, Wi-Fi), wireless broadband (Wi-bro), worldwide interoperability for microwave access (Wi-max) and high speed downlink packet access (HSDPA). In some embodiments, the second communication unit 122 may support a short range communication to communicate with the external device (for example, the vehicle 110). Examples of such short range communication may include, but not be limited to, Bluetooth, Radio Frequency Identification (RFID), Ultra-wideband (UWB) and ZigBee.

As described above, the first communication unit 112 of the vehicle 110 and the second communication unit 122 of the mobile device 120 are capable of data communication with each other via the communications network 130.

In accordance with some embodiments of the present invention, the vehicle control unit 111 is operable to detect the user's input to control at least one of a door and a start of an engine. In some embodiments, the vehicle control unit 111 may detect the user's input on a door handle button, a start button and/or a trunk button. For example, if the door handle button is touched or pressed, the vehicle control unit 111 may detect that the user wishes to unlock the door 113. As another example, if the start button is touched or pressed, the vehicle control unit 111 may detect that the user wishes to start the engine 114 to start the vehicle 110.

When the user's input is detected, the vehicle control unit 111 may determine whether there is the user (for example, the authorised user) carrying the mobile device 120 around the vehicle 110. For such determination, the vehicle control unit 111 is operable to authenticate the mobile device 120 using the data communication between the first communication unit 112 and the second communication unit 122. For example, the first communication unit 112 and the second communication unit 122 may exchange authentication information.

The authentication information may include first authentication information stored in a memory (not shown) of the vehicle 110 and second authentication information stored in a memory (not shown) of the mobile device 120. The first authentication information may include, but not be limited to, at least one of an identification information of the vehicle 110 (for example, a vehicle licence plate number, vehicle manufacturer's information, and vehicle delivery date and time, etc.), an encryption key and a decryption key. The second authentication information may include, but not be limited to, at least one of an identification information of the mobile device 120 (for example, an international mobile equipment identity (IMEI) number), an encryption key and a decryption key. In some embodiments, the first authentication information and the second authentication information may be the same type of authentication information. In some other embodiments, the first authentication information and the second authentication information may be different types of authentication information.

In some embodiments, when the connection between the first communication unit 112 and the second communication unit 122 is established, the first authentication information stored in the vehicle 110 and the second authentication information stored in the mobile device 120 are activated. Thereafter, the first authentication information and the second authentication information are exchanged between the vehicle 110 and the mobile device 120. In this manner, the authentication between the vehicle 110 and the mobile device 120 are performed.

When the mobile device 120 is authenticated by the vehicle control unit 111, the vehicle control unit 111 is operable to collect the latest position of the mobile device 120 and the motion pattern of the mobile device 120 from the sensor 121 to determine the current position of the mobile device 120 with respect to the vehicle 110.

In some embodiments, as described above, the sensor 121, for example the location sensor, of the mobile device 120 may detect the latest position of the mobile device 120. For example, the latest position of the mobile device 120 may be a position of the mobile device 120 right before detecting the user's input. The sensor 121, for example the motion sensor, of the mobile device 120 may obtain the motion pattern of the mobile device 120. For example, the motion sensor may detect whether the mobile device 120 is moving (for example, along with the user) or being kept in place.

The vehicle control unit 111 may determine the current position of the mobile device 120 with respect to the vehicle 110, based on the collected information including the latest position and the motion pattern of the mobile device 120. In some embodiments, the vehicle control unit 111 may combine the latest position and the motion pattern of the mobile device 120 to determine where the mobile device 120 is positioned with respect to the vehicle 110. For example, the vehicle control unit 111 may determine whether the mobile device 120 is positioned inside the vehicle 110 or outside the vehicle 110. Details on such determination will be described below.

The vehicle control unit 111 may then decide whether to control the at least one of the door 113 and the start of the engine 114. For example, if the user inputs the door handle button to unlock the door 113 and the vehicle control unit 111 determines that the current position of the mobile device 120 is outside the vehicle 110, the vehicle control unit 111 may control the door 113 to unlock the door 113. As another example, if the user inputs the start button to start the vehicle 110 and the vehicle control unit 111 determines that the current position of the mobile device 120 is inside the vehicle 110, the vehicle control unit 111 may start the engine 114 to start the vehicle 110. As another example, if the user inputs the start button to start the vehicle 110 and the vehicle control unit 111 determines that the current position of the mobile device 120 is outside the vehicle 110, the vehicle control unit 111 may not start the engine 114.

As described above, the system 100 and the method in accordance with the present invention can accurately detect whether the user carries the mobile device 120 which is used as the key for the vehicle 110. In accordance with the present invention, such detection may not be influenced by an external factor such as noise reflection and collision of an electromagnetic, and thereby may be more correct. In addition, in view that the present invention utilises the sensor 121 equipped in the mobile device 120, it is not needed to modify the hardware of the mobile device 120 to achieve such functions.

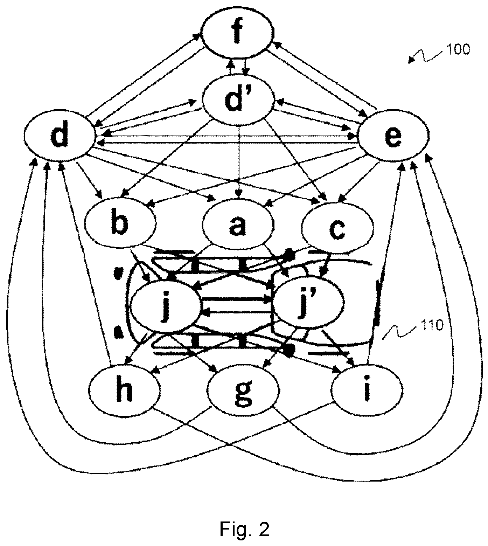

Fig. 2 is a conceptual diagram in accordance with an embodiment of the present invention.

As described above, the vehicle control unit 111 may determine the current position of the mobile device 120 with respect to the vehicle 110 based on the collected information including the latest position and the motion pattern of the mobile device 120. In some embodiments, the vehicle control unit 111 may combine the latest position and the motion pattern of the mobile device 120 to determine where the mobile device 120 is positioned with respect to the vehicle 110. For example, the vehicle control unit 111 may determine whether the mobile device 120 is positioned inside the vehicle 110 or outside the vehicle 110.

If the latest position of the mobile device 120 is detected as outside the vehicle 110 and the motion pattern of the mobile device 120 is detected as moving from outside the vehicle 110 to inside the vehicle 110, the vehicle control unit 111 determines the current position of the mobile device 120 as inside the vehicle 110.

In some embodiments, if the latest position of the mobile device 120 is detected as outside the vehicle 110 and one of the following motion patterns (a), (b) and (c) is detected, the vehicle control unit 111 may determine that the mobile device 120 is inside the vehicle 110:
(a) where the mobile device 120 is carried in the vehicle 110 through the door 113 of the vehicle 110;
(b) where the mobile device 120 is carried in the vehicle 110 through a window (not shown) of the vehicle 110; and/or
(c) where the mobile device 120 is carried in the vehicle 110 through a tailgate (not shown) or a trunk (not shown) of the vehicle 110.

If the latest position of the mobile device 120 is detected as outside the vehicle 110 and the motion pattern of the mobile device 120 is detected as keeping outside the vehicle 110, the vehicle control unit 111 determines the current position of the mobile device 120 as outside the vehicle 110.

In some embodiments, if the latest position of the mobile device 120 is detected as outside the vehicle 110 and one of the following motion patterns (d), (d'), (e) and (f) is detected, the vehicle control unit 111 may determine that the mobile device 120 is outside the vehicle 110:
(d) where the mobile device 120 is still kept outside the vehicle 110 without its movement;
(d') where the mobile device 120 is still kept outside the vehicle 110 with its movement (for example, movement by the user carrying the mobile device 120);
(e) where the mobile device 120 approaches to the vehicle 110; and/or
(f) where the mobile device 120 moves away from the vehicle 110.

If the latest position of the mobile device 120 is detected as inside the vehicle 110 and the motion pattern of the mobile device 120 is detected as moving from inside the vehicle to outside the vehicle 110, the vehicle control unit 111 determines the current position of the mobile device 120 as outside the vehicle 110.

In some embodiments, if the latest position of the mobile device 120 is detected as inside the vehicle 110 and one of the following motion patterns (g), (h) and (i) is detected, the vehicle control unit 111 may determine that the mobile device 120 is outside the vehicle 110:
(g) where the mobile device 120 is carried out from the vehicle 110 through the door 113 of the vehicle 110;
(h) where the mobile device 120 is carried out from the vehicle 110 through the window of the vehicle 110; and/or
(i) where the mobile device 120 is carried out from the vehicle 110 through the tailgate or the trunk of the vehicle 110.

if the latest position of the mobile device 120 is detected as inside the vehicle 110 and the motion pattern of the mobile device 120 is detected as keeping inside the vehicle 110, the vehicle control unit 111 determines the current position of the mobile device 120 as inside the vehicle 110.

In some embodiments, if the latest position of the mobile device 120 is detected as inside the vehicle 110 and one of the following motion patterns (j) and (j') is detected, the vehicle control unit 111 may determine that the mobile device 120 is inside the vehicle 110:
(j) where the mobile device 120 is still kept inside a cabin (not shown) of the vehicle 110; and/or
(j') where the mobile device 120 is moved inside the cabin of the vehicle 110.

It may be appreciated that, in some embodiments, any combination of the above motion patterns (a) to (j') may be detected.

For example, if the latest position of the mobile device 120 is detected as outside the vehicle 110 and a combination of one of the motion patterns (a) to (c) and the motion pattern (j) is detected, the vehicle control unit 111 may determine that the mobile device 120 is inside the vehicle 110.

As another example, if the latest position of the mobile device 120 is detected as inside the vehicle 110 and a combination of one of the motion patterns (g) to (i) and the motion pattern (f) is detected, the vehicle control unit 111 may determine that the mobile device 120 is outside the vehicle 110.

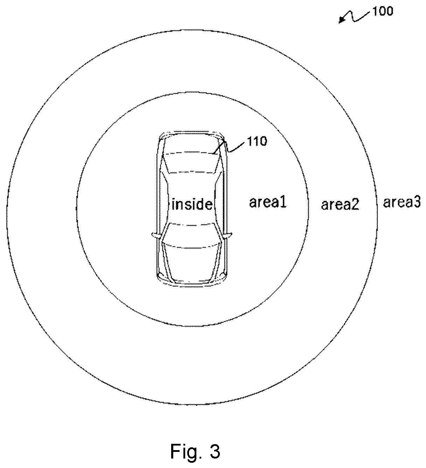

Fig. 3 is another conceptual diagram in accordance with an embodiment of the present invention.

The system 100 may combine with another system, for example Bluetooth localisation system. As shown in Fig. 3, outside of the vehicle 110 may be classified as a plurality of areas (for example, a first area, a second area and a third area) based on the distance from the vehicle 110, according to the Bluetooth localisation system.

In some embodiments, if the latest position of the mobile device 120 is detected as outside the vehicle 110, for example the third area, the second area and the first area sequentially, and the motion pattern (e) is detected, the vehicle control unit 111 may determine that the mobile device 120 is outside the vehicle 110. For example, the vehicle control unit 111 may further determine that the user carrying the mobile device 120 wishes to get into the vehicle 110 based on the detection. Therefore, if the user touches or presses the door handle button, the vehicle control unit 111 may unlock the door 113 of the vehicle 110. It may be appreciated that, in some other embodiments, the vehicle control unit 111 may automatically unlock the door 113 of the vehicle 110 without the user's input on the door handle button.

In some embodiments, if the latest position of the mobile device 120 is detected as outside the vehicle 110, for example the first area, and one of the motion patterns (a) to (c) is detected, the vehicle control unit 111 may determine that the mobile device 120 is inside the vehicle 110. For example, the vehicle control unit 111 may further determine that the user carrying the mobile device 120 has just got into the vehicle 110 based on the detection. Therefore, if the user touches or presses the start button, the vehicle control unit 111 may start the engine 114. If however an input on the door handle button to unlock the door 113 is detected, the vehicle control unit 111 may not unlock the door 113.

In some embodiments, if the latest position of the mobile device 120 is detected as inside the vehicle 110 and one of the motion patterns (j) and (j') is detected, the vehicle control unit 111 may determine that the mobile device 120 is inside the vehicle 110. Therefore, if the user touches or presses the start button, the vehicle control unit 111 may start the engine 114. If however an input on the door handle button to unlock the door 113 is detected, the vehicle control unit 111 may not unlock the door 113.

In some embodiments, if the latest position of the mobile device 120 is detected as inside the vehicle 110, and one of the motion patterns (g) to (i) is detected, the vehicle control unit 111 may determine that the mobile device 120 is outside the vehicle 110, for example in the first area. For example, the vehicle control unit 111 may further determine that the user carrying the mobile device 120 has just got off the vehicle 110 based on the detection. Therefore, if the user touches or presses the door handle button, the vehicle control unit 111 may lock the door 113. It may be appreciated that, in some other embodiments, the vehicle control unit 111 may automatically lock the door 113 of the vehicle 110 without the user's input on the door handle button. If however an input on the start button to start the engine 114 is detected, the vehicle control unit 111 may not start the engine 114.

In some embodiments, if the latest position of the mobile device 120 is detected as outside the vehicle 110, for example the first area, the second area and the third area sequentially, and the motion pattern (f) is detected, the vehicle control unit 111 may determine that the mobile device 120 is outside the vehicle 110. For example, the vehicle control unit 111 may further determine that the user carrying the mobile device 120 is moving away from the vehicle 110 based on the detection. Therefore, if the user touches or presses the door handle button, the vehicle control unit 111 may lock the door 113. It may be appreciated that, in some other embodiments, the vehicle control unit 111 may automatically lock the door 113 of the vehicle 110 without the user's input on the door handle button.

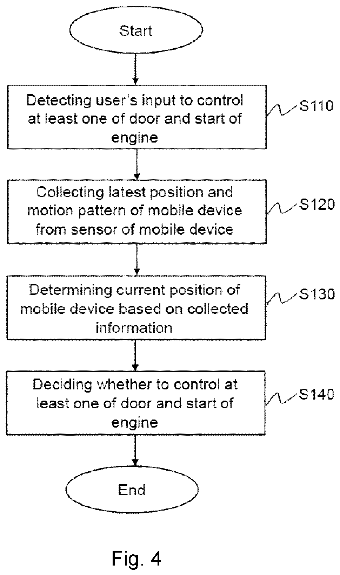

Fig. 4 is a flowchart in accordance with an embodiment of the present invention.

First, the vehicle control unit 111 detects the user's input to control at least one of the door 113 and the start of the engine 114 (S110). For example, the vehicle control unit 111 may detect the user's input on the door handle button, the start button and/or the trunk button. For example, if the door handle button is touched or pressed, the vehicle control unit 111 may detect that the user wishes to unlock the door 113. As another example, if the start button is touched or pressed, the vehicle control unit 111 may detect that the user wishes to start the engine 114 to start the vehicle 110.

Next, the vehicle control unit 111 collects the latest position and the motion pattern of the mobile device 120 from sensor 121 of mobile device 120 (S120). The sensor 121, for example the location sensor, may detect the latest position of the mobile device 120. The sensor 121, for example the motion sensor, may obtain the motion pattern of the mobile device 120.

The vehicle control unit 111 may then determine the current position of mobile device 120 with respect to the vehicle 110, based on collected information (S130). The vehicle control unit 111 may combine the latest position and the motion pattern of the mobile device 120, and then use the combined information to determine the current position of mobile device 120 with respect to the vehicle 110. In this manner, the vehicle control unit 111 may determine whether the mobile device 120 is positioned inside the vehicle 110 or outside the vehicle 110. In some embodiments, the vehicle control unit 111 may further determine the user's intention. For example, the vehicle control unit 111 may determine if the user wishes to lock/unlock the door 113 and/or to start the engine 114 based on the combined information.

The vehicle control unit 111 may decide whether to control the at least one of door 113 and start of engine 114 (S140). For example, if the user has inputted the door handle button to unlock the door 113 and the vehicle control unit 111 determines that the current position of the mobile device 120 is outside the vehicle 110, the vehicle control unit 111 may control the door 113 to unlock the door 113. As another example, if the user has inputted the start button to start the vehicle 110 and the vehicle control unit 111 determines that the current position of the mobile device 120 is inside the vehicle 110, the vehicle control unit 111 may start the engine 114 to start the vehicle 110. As another example, if the user has inputted the start button to start the vehicle 110 and the vehicle control unit 111 determines that the current position of the mobile device 120 is outside the vehicle 110, the vehicle control unit 111 may not start the engine 114.

As described above, such decision may be made based on the determination of S130. Although not shown, it may be appreciated that a machine learning algorithm may further be used to make such decision. For example, a combination of the motion pattern and the machine learning algorithm may be used to make such decision.

As described above, when the user touches or presses the door handle button or start button, the system 100 and the method in accordance with the present invention can detect the current position of the mobile device 120 with respect to the vehicle 110, to make sure whether the user carries the mobile device 120 which is used as the key. The system 100 and the method aim to prevent unintended control (for example, unintended locking/unlocking and/or starting the vehicle 110), when the user carrying the mobile device 120 moves away from the vehicle 110 but a third party tries to start the engine 114. The system 100 and the method in accordance with the present invention use the built-in sensor 121 of the mobile device 120 to detect whether the user carries in/out the mobile device 120 from the vehicle 110 before the user touches or presses the door handle button or start button.

The detection in accordance with the present invention may not be influenced by an external factor (for example, noise reflection and collision of the electromagnetic). In addition, the built-in sensor 121 of the mobile device 120 may have much low tolerance than the radio performance of the mobile device 120. In this regard, it may be easier to improve controllable detection accuracy. In addition, as the built-in sensor 121 is used, it may not be needed to add an extra hardware on the mobile device 120 to achieve the above function.

While the present invention has been particularly shown and described with reference to exemplary embodiments thereof, it will be understood by those skilled in the art that various changes in form and details may be made therein without departing from the scope of the present invention as defined by the appended claims.

### LIST OF REFERENCE SIGNS

| | | | |
|---|---|---|---|
| 100: | System | 110: | Vehicle |
| 111: | Vehicle control unit | 112: | First communication unit |
| 113: | Door | 114: | Engine |
| 120: | Mobile device | 121: | Sensor |
| 122: | Second communication unit | 130: | Communications network |

## Claims

1. A vehicle (110) having at least one door (113) and an engine (114), the vehicle (110) comprising:
a vehicle control unit (111) comprising:
a door control unit configurable to control at least one door (113) and an engine control unit configurable to control the engine (114), control being based on:
detection of one of user input to the at least one door (113) and user input to start the engine (114), and
detection of a position and a motion pattern associated with a mobile device (120) communicable with the vehicle control unit (111), the mobile device (120) comprising a sensor (121) capable of detecting the position and the motion pattern of the mobile device (120), wherein:
when the vehicle control unit (111) detects the user input, the vehicle control unit (111) is operable to:
collect a latest position of the mobile device (120) and the motion pattern of the mobile device (120) from the sensor (121),
determine a current position of the mobile device (120) with respect to the vehicle (110) based on the collected information, and
decide whether to control the at least one of the door (113) and the start of the engine (114).

2. The vehicle (110) according to claim 1, further comprising a first communication unit (112) and the mobile device (120) comprises a second communication unit (122), and the first and the second communication units (112, 122) are capable of data communication with each other.

3. The vehicle (110) according to claim 2, wherein when the vehicle control unit (111) detects the user's input, the vehicle control unit (111) is operable to authenticate the mobile device (120) using the data communication between the first communication unit and the second communication unit (112, 122).

4. The vehicle (110) according to claim 2 or claim 3, wherein when the mobile device (120) is authenticated by the vehicle control unit (111), the vehicle control unit (111) collects the latest position of the mobile device (120) and the motion pattern of the mobile device (120) from the sensor (121) to determine the current position of the mobile device (120) with respect to the vehicle (110).

5. The vehicle (110) according to any one of claims 1 to 4, wherein the latest position of the mobile device (120) is a position of the mobile device (120) before detecting the user's input.

6. The vehicle (110) according to any one of claims 1 to 5, wherein if the latest position of the mobile device (120) is detected as inside the vehicle (110) and the motion pattern of the mobile device (120) is detected as moving from inside the vehicle (110) to outside the vehicle (110), the vehicle control unit (111) determines the current position of the mobile device (120) as outside the vehicle (110).

7. The vehicle (110) according to any one of claims 1 to 5, wherein if the latest position of the mobile device (120) is detected as inside the vehicle (110) and the motion pattern of the mobile device (120) is detected as keeping inside the vehicle (110), the vehicle control unit (111) determines the current position of the mobile device (120) as inside the vehicle (110).

8. The vehicle (110) according to any one of claims 1 to 5, wherein if the latest position of the mobile device (120) is detected as outside the vehicle (110) and the motion pattern of the mobile device (120) is detected as moving from outside the vehicle (110) to inside the vehicle (110), the vehicle control unit (111) determines the current position of the mobile device (120) as inside the vehicle (110).

9. The vehicle (110) according to any one of claims 1 to 5, wherein if the latest position of the mobile device (120) is detected as outside the vehicle (110) and the motion pattern of the mobile device (120) is detected as keeping outside the vehicle (110), the vehicle control unit (111) determines the current position of the mobile device (120) as outside the vehicle (110).

10. The vehicle (110) according to any one of claims 1 to 9, wherein the sensor (121) includes at least one of a gyro sensor, an acceleration sensor and a magnetometric sensor.

11. The vehicle (110) according to any one of claims 1 to 10, wherein the control of the door (113) includes at least one of locking and unlocking the door (113) of the vehicle (110).

12. A method of controlling a vehicle (110) comprising:
detecting a user's input to control at least one of a door (113) and a start of an engine (114);
collecting a latest position of a mobile device (120) and a motion pattern of the mobile device (120) from a sensor (121) of the mobile device (120);
determining a current position of the mobile device (120) with respect to the vehicle (110) based on the collected information; and
deciding whether to control the at least one of the door (113) and the start of the engine (114) based on the user's input, the current position of the mobile device (120) and the motion pattern of the mobile device (120).

13. The method according to claim 12 further comprising a step of authenticating the mobile device (120) using a data communication between the mobile device (120) and the vehicle (110).

14. The method according to claim 13, wherein after the step of authenticating of the mobile device (120), the step of collecting the latest position of the mobile device (120) and the motion pattern of the mobile device (120) is operated.

## Patentansprüche

1. Fahrzeug (110), das mindestens eine Tür (113) und einen Motor (114) aufweist, wobei das Fahrzeug (110) Folgendes umfasst:
eine Fahrzeugsteuereinheit (111), umfassend:
eine Türsteuereinheit, die zum Steuern mindestens einer Tür (113) konfigurierbar ist, und eine Motorsteuereinheit, die zum Steuern des Motors (114) konfigurierbar ist, wobei die Steuerung auf Folgendem basiert:
Erfassung einer von einer Benutzereingabe an der mindestens einen Tür (113) und einer Benutzereingabe zum Starten des Motors (114) und
Erfassung einer Position und eines Bewegungsmusters, die einer mobilen Vorrichtung (120) zugeordnet sind, die mit der Fahrzeugsteuereinheit (111) kommunizieren kann, wobei die mobile Vorrichtung (120) einen Sensor (121) umfasst, der in der Lage ist, die Position und das Bewegungsmuster der mobilen Vorrichtung (120) zu erfassen, wobei:
die Fahrzeugsteuereinheit (111), wenn die Fahrzeugsteuereinheit (111) die Benutzereingabe erfasst, zu Folgendem betreibbar ist:
Erhalten einer letzten Position der mobilen Vorrichtung (120) und des Bewegungsmusters der mobilen Vorrichtung (120) von dem Sensor (121),
Bestimmen einer aktuellen Position der mobilen Vorrichtung (120) in Bezug auf das Fahrzeug (110) auf Grundlage der erhaltenen Informationen und
Entscheiden, ob die Tür (113) und/oder der Start des Motors (114) zu steuern ist/sind.

2. Fahrzeug (110) nach Anspruch 1, ferner umfassend eine erste Kommunikationseinheit (112), und wobei die mobile Vorrichtung (120) eine zweite Kommunikationseinheit (122) umfasst und die erste und die zweite Kommunikationseinheit (112, 122) zu einer Datenkommunikation miteinander in der Lage sind.

3. Fahrzeug (110) nach Anspruch 2, wobei die Fahrzeugsteuereinheit (111), wenn die Fahrzeugsteuereinheit (111) die Eingabe des Benutzers erfasst, betreibbar ist, um die mobile Vorrichtung (120) unter Verwendung der Datenkommunikation zwischen der ersten Kommunikationseinheit und der zweiten Kommunikationseinheit (112, 122) zu authentifizieren.

4. Fahrzeug (110) nach Anspruch 2 oder Anspruch 3, wobei die Fahrzeugsteuereinheit (111), wenn die mobile Vorrichtung (120) durch die Fahrzeugsteuereinheit (111) authentifiziert ist, die letzte Position der mobilen Vorrichtung (120) und das Bewegungsmuster der mobilen Vorrichtung (120) von dem Sensor (121) erhält, um die aktuelle Position der mobilen Vorrichtung (120) in Bezug auf das Fahrzeug (110) zu bestimmen.

5. Fahrzeug (110) nach einem der Ansprüche 1 bis 4, wobei die letzte Position der mobilen Vorrichtung (120) eine Position der mobilen Vorrichtung (120) ist, bevor die Eingabe des Benutzers erfasst wird.

6. Fahrzeug (110) nach einem der Ansprüche 1 bis 5, wobei die Fahrzeugsteuereinheit (111), wenn die letzte Position der mobilen Vorrichtung (120) als innerhalb des Fahrzeugs (110) erfasst ist und das Bewegungsmuster der mobilen Vorrichtung (120) als sich von innerhalb des Fahrzeugs (110) nach außerhalb des Fahrzeugs (110) bewegend erfasst ist, die aktuelle Position der mobilen Vorrichtung (120) als außerhalb des Fahrzeugs (110) bestimmt.

7. Fahrzeug (110) nach einem der Ansprüche 1 bis 5, wobei die Fahrzeugsteuereinheit (111), wenn die letzte Position der mobilen Vorrichtung (120) als innerhalb des Fahrzeugs (110) erfasst ist und das Bewegungsmuster der mobilen Vorrichtung (120) als innerhalb des Fahrzeugs (110) bleibend erfasst ist, die aktuelle Position der mobilen Vorrichtung (120) als innerhalb des Fahrzeugs (110) bestimmt.

8. Fahrzeug (110) nach einem der Ansprüche 1 bis 5, wobei die Fahrzeugsteuereinheit (111), wenn die letzte Position der mobilen Vorrichtung (120) als außerhalb des Fahrzeugs (110) erfasst ist und das Bewegungsmuster der mobilen Vorrichtung (120) als sich von außerhalb des Fahrzeugs (110) nach innerhalb des Fahrzeugs (110) bewegend erfasst ist, die aktuelle Position der mobilen Vorrichtung (120) als innerhalb des Fahrzeugs (110) bestimmt.

9. Fahrzeug (110) nach einem der Ansprüche 1 bis 5, wobei die Fahrzeugsteuereinheit (111), wenn die letzte Position der mobilen Vorrichtung (120) als außerhalb des Fahrzeugs (110) erfasst ist und das Bewegungsmuster der mobilen Vorrichtung (120) als außerhalb des Fahrzeugs (110) bleibend erfasst ist, die aktuelle Position der mobilen Vorrichtung (120) als außerhalb des Fahrzeugs (110) bestimmt.

10. Fahrzeug (110) nach einem der Ansprüche 1 bis 9, wobei der Sensor (121) mindestens einen von einem Kreiselsensor, einem Beschleunigungssensor und einem magnetometrischen Sensor beinhaltet.

11. Fahrzeug (110) nach einem der Ansprüche 1 bis 10, wobei die Steuerung der Tür (113) mindestens eines von Verriegeln und Entriegeln der Tür (113) des Fahrzeugs (110) beinhaltet.

12. Verfahren zum Steuern eines Fahrzeugs (110), umfassend:
Erfassen einer Eingabe eines Benutzers zum Steuern einer Tür (113) und/oder eines Starts eines Motors (114);
Erhalten einer letzten Position einer mobilen Vorrichtung (120) und eines Bewegungsmusters der mobilen Vorrichtung (120) von einem Sensor (121) der mobilen Vorrichtung (120);
Bestimmen einer aktuellen Position der mobilen Vorrichtung (120) in Bezug auf das Fahrzeug (110) auf Grundlage der erhaltenen Informationen; und
Entscheiden, ob die Tür (113) und/oder der Start des Motors (114) zu steuern ist/sind, auf Grundlage der Eingabe des Benutzers, der aktuellen Position der mobilen Vorrichtung (120) und des Bewegungsmusters der mobilen Vorrichtung (120).

13. Verfahren nach Anspruch 12, ferner umfassend einen Schritt des Authentifizierens der mobilen Vorrichtung (120) unter Verwendung einer Datenkommunikation zwischen der mobilen Vorrichtung (120) und dem Fahrzeug (110).

14. Verfahren nach Anspruch 13, wobei nach dem Schritt des Authentifizierens der mobilen Vorrichtung (120) der Schritt des Erhaltens der letzten Position der mobilen Vorrichtung (120) und des Bewegungsmusters der mobilen Vorrichtung (120) vorgenommen wird.

## Revendications

1. Véhicule (110) ayant au moins une porte (113) et un moteur (114), le véhicule (110) comprenant :
une unité de commande de véhicule (111) comprenant :
une unité de commande de porte configurable pour commander au moins une porte (113) et une unité de commande de moteur configurable pour commander le moteur (114), la commande étant basée sur :
la détection de l'une d'une entrée utilisateur vers l'au moins une porte (113) et d'une entrée utilisateur pour démarrer le moteur (114), et
la détection d'une position et d'un motif de mouvement associés à un dispositif mobile (120) pouvant être communiqués à l'unité de commande de véhicule (111), le dispositif mobile (120) comprenant un capteur (121) capable de détecter la position et
le motif de mouvement du dispositif mobile (120), dans lequel : lorsque l'unité de commande de véhicule (111) détecte l'entrée utilisateur, l'unité de commande de véhicule (111) est opérationnelle pour :
collecter une dernière position du dispositif mobile (120) et le motif de mouvement du dispositif mobile (120) à partir du capteur (121),
déterminer une position actuelle du dispositif mobile (120) par rapport au véhicule (110) sur la base des informations collectées, et
décider s'il faut commander l'au moins l'un de la porte (113) et du démarrage du moteur (114).

2. Véhicule (110) selon la revendication 1, comprenant également une première unité de communication (112) et le dispositif mobile (120) comprend une seconde unité de communication (122), et la première et la seconde unités de communication (112, 122) sont capables de communiquer des données entre elles.

3. Véhicule (110) selon la revendication 2, dans lequel lorsque l'unité de commande de véhicule (111) détecte l'entrée de l'utilisateur, l'unité de commande de véhicule (111) est opérationnelle pour authentifier le dispositif mobile (120) à l'aide de la communication de données entre la première unité de communication et la seconde unité de communication (112, 122).

4. Véhicule (110) selon la revendication 2 ou la revendication 3, dans lequel lorsque le dispositif mobile (120) est authentifié par l'unité de commande de véhicule (111), l'unité de commande de véhicule (111) collecte la dernière position du dispositif mobile (120) et le motif de mouvement du dispositif mobile (120) à partir du capteur (121) pour déterminer la position actuelle du dispositif mobile (120) par rapport au véhicule (110).

5. Véhicule (110) selon l'une quelconque des revendications 1 à 4, dans lequel la dernière position du dispositif mobile (120) est une position du dispositif mobile (120) avant la détection de l'entrée de l'utilisateur.

6. Véhicule (110) selon l'une quelconque des revendications 1 à 5, dans lequel si la dernière position du dispositif mobile (120) est détectée comme étant à l'intérieur du véhicule (110) et que le motif de mouvement du dispositif mobile (120) est détecté comme se déplaçant de l'intérieur du véhicule (110) vers l'extérieur du véhicule (110), l'unité de commande de véhicule (111) détermine la position actuelle du dispositif mobile (120) comme étant à l'extérieur du véhicule (110).

7. Véhicule (110) selon l'une quelconque des revendications 1 à 5, dans lequel si la dernière position du dispositif mobile (120) est détectée comme étant à l'intérieur du véhicule (110) et que le motif de mouvement du dispositif mobile (120) est détecté comme restant à l'intérieur du véhicule (110), l'unité de commande de véhicule (111) détermine la position actuelle du dispositif mobile (120) comme étant à l'intérieur du véhicule (110).

8. Véhicule (110) selon l'une quelconque des revendications 1 à 5, dans lequel si la dernière position du dispositif mobile (120) est détectée comme étant à l'extérieur du véhicule (110) et que le motif de mouvement du dispositif mobile (120) est détecté comme se déplaçant de l'extérieur du véhicule (110) vers l'intérieur du véhicule (110), l'unité de commande de véhicule (111) détermine la position actuelle du dispositif mobile (120) comme étant à l'intérieur du véhicule (110).

9. Véhicule (110) selon l'une quelconque des revendications 1 à 5, dans lequel si la dernière position du dispositif mobile (120) est détectée comme étant à l'extérieur du véhicule (110) et que le motif de mouvement du dispositif mobile (120) est détecté comme restant à l'extérieur du véhicule (110), l'unité de commande de véhicule (111) détermine la position actuelle du dispositif mobile (120) comme étant à l'extérieur du véhicule (110).

10. Véhicule (110) selon l'une quelconque des revendications 1 à 9, dans lequel le capteur (121) comporte au moins l'un d'un capteur gyroscopique, d'un capteur d'accélération et d'un capteur magnétométrique.

11. Véhicule (110) selon l'une quelconque des revendications 1 à 10, dans lequel la commande de la porte (113) comporte au moins l'un du verrouillage et du déverrouillage de la porte (113) du véhicule (110).

12. Procédé de commande d'un véhicule (110) comprenant :
la détection de l'entrée d'un utilisateur pour commander au moins l'un d'une porte (113) et d'un démarrage d'un moteur (114) ;
la collecte d'une dernière position d'un dispositif mobile (120) et d'un motif de mouvement du dispositif mobile (120) à partir d'un capteur (121) du dispositif mobile (120) ;
la détermination d'une position actuelle du dispositif mobile (120) par rapport au véhicule (110) sur la base des informations collectées ; et
le fait de décider s'il faut commander l'au moins l'un de la porte (113) et du démarrage du moteur (114) sur la base de l'entrée de l'utilisateur, de la position actuelle du dispositif mobile (120) et du motif de mouvement du dispositif mobile (120).

13. Procédé selon la revendication 12 comprenant également une étape d'authentification du dispositif mobile (120) à l'aide d'une communication de données entre le dispositif mobile (120) et le véhicule (110).

14. Procédé selon la revendication 13, dans lequel après l'étape d'authentification du dispositif mobile (120), l'étape de collecte de la dernière position du dispositif mobile (120) et du motif de mouvement du dispositif mobile (120) est mise en œuvre.
